(19) Europäisches Patentamt
European Patent Office
Office européen des brevets

(11) **EP 3 657 670 B1**

(12) **EUROPÄISCHE PATENTSCHRIFT**

(45) Veröffentlichungstag und Bekanntmachung des Hinweises auf die Patenterteilung:
**28.12.2022 Patentblatt 2022/52**

(21) Anmeldenummer: **18208372.5**

(22) Anmeldetag: **26.11.2018**

(51) Internationale Patentklassifikation (IPC):
**H02P 29/10** (2016.01)  **H02P 27/08** (2006.01)
**H02P 7/29** (2016.01)

(52) Gemeinsame Patentklassifikation (CPC):
**H02P 29/10; H02P 7/2913; H02P 27/08;**
H02P 2203/09

(54) **VERFAHREN SOWIE VORRICHTUNG ZUR FEHLERSICHEREN DREHZAHLÜBERWACHUNG**

METHOD AND DEVICE FOR FAIL-SAFE SPEED MONITORING

PROCÉDÉ AINSI QUE DISPOSITIF DE SURVEILLANCE DE LA VITESSE DE ROTATION PROTÉGÉE CONTRE LES ERREURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.05.2020 Patentblatt 2020/22**

(73) Patentinhaber: **KEB Automation KG**
**32683 Barntrup (DE)**

(72) Erfinder: **Musiolik, Stephan**
**32756 Detmold (DE)**

(74) Vertreter: **Brinkmann & Partner**
**Patentanwälte**
**Partnerschaft mbB**
**Am Seestern 8**
**40547 Düsseldorf (DE)**

(56) Entgegenhaltungen:
**DE-A1-102005 010 854     DE-A1-102011 009 927**

**Beschreibung**

Die Erfindung betrifft ein Verfahren zur fehlersicheren Drehzahlüberwachung eines geberlosen Drehstromantriebs, bei dem der Drehstromantrieb von einer einen Wechselrichter aufweisenden Antriebselektronik dreiphasig mit den Phasen U, V, W angesteuert wird, wobei die Spannungssignale an den drei Phasen U, V, W als pulsweitenmodulierte Signale vorliegen, bei dem eine am Antrieb anliegende Ausgangsfrequenz des Wechselrichters ermittelt und daraus eine Istdrehzahl des Antriebs bestimmt wird, bei dem die Istdrehzahl mit einer vorgebbaren Solldrehzahl verglichen wird und bei dem im Falle einer Überschreitung der Solldrehzahl durch die Istdrehzahl ein Abschalten des Antriebs erfolgt, wobei die Ausgangsfrequenz zweikanalig ermittelt wird und zur Ermittlung der Ausgangsfrequenz des Wechselrichters in einem ersten Kanal ausschließlich die Pulsbreite der pulsbreitenmodulierten Signale verwendet wird. Des Weiteren betrifft die Erfindung eine Vorrichtung zur fehlersicheren Drehzahlüberwachung eines geberlosen Drehstromantriebs, insbesondere zur Durchführung des erfindungsgemäßen Verfahrens.

Ein gattungsgemäßes Verfahren ist aus der DE 10 2005 010 854 A1 bekannt.

Drehstromantriebe der in Rede stehenden Art dienen in der industriellen Anwendung dem Antrieb von Werkzeugmaschinen, Robotern, Förderbändern und/oder dgl. Sie stellen eine potentielle Gefahr insbesondere für Bedienpersonen dar, weshalb es einer entsprechenden Absicherung bedarf. Mögliche Maßnahmen zur Absicherung insbesondere von elektrischen Leistungsantrieben sind in EN 61800-5-2 "Elektrische Leistungsantriebssysteme mit einstellbarer Drehzahl; Teil 5-2; Anforderungen an die Sicherheit - funktionale Sicherheit" normiert.

Eine der normierten Sicherheitsfunktionen betrifft die sogenannte sichere Maximalgeschwindigkeit (SLS - Safely Limited Speed). Gemäß dieser Sicherheitsfunktion wird überwacht, dass antriebsseitig eine vorgebbare Maximalgeschwindigkeit, d.h. Drehzahl nicht überschritten wird. Es wird zu diesem Zweck die Drehzahl des Antriebs überwacht und bei Feststellung einer Überschreitung einer vorgebbaren Grenzdrehzahl eine Fehlerreaktion ausgelöst. Eine mögliche Fehlerreaktion ist die sofortige Unterbrechung der Energieversorgung des Antriebs, der dadurch ungesteuert stillgesetzt wird (STO - Safe Torque Off).

Zwecks normgerechter Umsetzung unter anderem der Sicherheitsfunktion SLS ist es aus dem Stand der Technik bekannt, externe Sensoren einzusetzen, beispielsweise zur Drehzahlbestimmung. Dabei müssen derartige Sensoren ihrerseits entsprechenden Sicherheitsnormen genügen, wie beispielsweise der EN 61508.

Die Verwendung einer externen Sensorik zur Drehzahlerfassung eines Antriebs hat sich im alltäglichen Praxiseinsatz zwar bewährt, doch es ergeben sich auch Nachteile. Zum einen ist der Einsatz externer Sensorik kostenaufwendig und somit per se von Nachteil, nicht zuletzt auch deshalb, weil es der zusätzlichen Einhaltung von Sicherheitsnormen bezüglich einer solchen externen Sensorik bedarf. Zum anderen kann es zur Einhaltung einschlägiger Normen wie zum Beispiel der EN 61800-5-2 erforderlich sein, redundant arbeitende Sensorsysteme einzusetzen, was ebenfalls zu höheren Kosten, aber auch zu einem höheren Montageaufwand führt.

Um den vorerläuterten Nachteilen zu begegnen, ist es aus der DE 10 2009 048 944 A1 bekannt, die Lastdrehzahl eines Motors anhand von Strom- und Spannungsverläufen zu ermitteln, wie sie von der Antriebselektronik an den Motor gegeben werden. Zu diesem Zweck ist es vorgesehen, dass die Ermittlung der Lastdrehzahl durch Berechnen eines Beobachtermodells anhand des erfassten Stroms, der erfassten Spannung, der von der Ansteuerung vorgegebenen Frequenz und der Kennfelddaten des Motors erfolgt.

Die aus der DE 10 2009 048 944 A1 bekannte Lösung kommt zwar ohne externe Sensorik aus, für eine normkonforme, zweikanalige Strom- und/oder Spannungserfassung ist es aber erforderlich, eine entsprechend redundant arbeitende Messeinrichtung vorzusehen, was aufwendig und damit teuer ist. Hinsichtlich einer Strommessung gilt es zudem zu berücksichtigen, dass es motorseitige Arbeitspunkte bzw. Lastfälle gibt, in denen der Strom bei null liegt. In diesen Fällen kann eine antriebsseitige Drehzahl nicht ermittelt werden, so dass in diesen Fällen die funktionale Sicherheit nicht gegeben ist. Dies ergibt sich insbesondere bei sogenannten Servomotoren sowie bei Synchronreluktanzmotoren, weshalb diese Motoren in der Regel von der Sicherheitsfunktion SLS ausgeschlossen sind.

Aus dem Stand der Technik ist gemäß der EP 1 211 774 A1 ferner eine sichere Geschwindigkeitsüberwachung für geberlose Drehstromantriebe bekannt, dergemäß bei einer Fehlererkennung ein zweikanaliges Abschalten erfolgt. Es ist zu diesem Zweck vorgesehen, dass in zwei annähernd redundanten Systemen ein ermittelter Ständerfrequenzsollwert zweikanalig begrenzt und überwacht wird, wobei in jedem System daraus jeweilige Steuersatzsignale für die Stromventile des Wechselrichters abgeleitet werden, die in zwei Überwachungselektroniken miteinander vergleichbar sind. Auch diese Ausgestaltung erweist sich aufgrund der redundanten System-Ausgestaltung als in der Umsetzung aufwendig und damit teuer.

Aus der schon eingangs genannten DE 10 2005 010 854 A1 ist ferner eine elektronische Schaltungsanordnung zur Erfassung von Geschwindigkeit, Kraft und Position von elektrischen Antrieben bekannt, die von Leistungsumrichtern versorgt werden. Dabei ist vorgesehen, dass diese Anordnung durch eine neuartige Kombination von Funktionen als auch tagarbeitendes Gerät an gegebene Frequenzumrichter und Servoumrichter anschließbar ist, wobei die Erfassung der Betriebsgrößen durch die Rückbildung der Drehfeldvektoren erfolgt, die der pulsweitenmodulierten Leistungsansteuerung zugrunde liegen.

Aus dem Stand der Technik sind gemäß der DE 10 2011 009 927 A1 ferner ein Verfahren sowie eine Vorrichtung zum Überwachen eines vorgegebenen Drehzahlwertes bei einem Antrieb bekannt. Dabei ist vorgesehen, dass der Motorspannung entsprechende erfasste Werte einem Sicherheitswächter zugeführt werden, wobei im Sicherheitswächter aus diesen erfassten Werten eine erste Drehzahl bestimmt wird. Des Weiteren wird der Motorstrom erfasst und die erfassten Werte dem Sicherheitswächter zugeführt, wobei im Sicherheitswächter aus den erfassten Motorstrom-Werten eine zweite Drehzahl bestimmt wird, so dass im Weiteren der erste und der zweite Drehzahlwert miteinander verglichen werden können.

Es ist ausgehend vom Vorbeschriebenen die **Aufgabe** der Erfindung, ein Verfahren zur fehlersicheren Drehzahlüberwachung eines geberlosen Drehstromantriebs vorzuschlagen, das bei gleichzeitiger Einhaltung der normierten Sicherheitsfunktionen eine gegenüber dem Stand der Technik vereinfachte Umsetzung ermöglicht. Mit der Erfindung soll des Weiteren eine entsprechende Vorrichtung zur Durchführung des Verfahrens vorgeschlagen werden.

Zur **Lösung** der vorstehenden Aufgabe wird verfahrensseitig vorgeschlagen, ein Verfahren der eingangs genannten Art, das sich dadurch auszeichnet, dass die Ausgangsfrequenz im ersten Kanal mittels eines ersten Mikrokontrollers einerseits und unabhängig davon in einem zweiten Kanal mittels eines zweiten Mikrokontrollers andererseits ermittelt wird, wobei zur Ermittlung der Ausgangsfrequenz des Wechselrichters auch im zweiten Kanal ausschließlich die Pulsbreite der pulsbreitenmodulierten Signale verwendet wird.

Vorrichtungsseitig wird zur **Lösung** der vorstehenden Aufgabe vorgeschlagen eine Vorrichtung zur fehlersicheren Drehzahlüberwachung eines geberlosen Drehstromantriebs, insbesondere zur Durchführung des vorstehenden Verfahrens, mit einer einen Wechselrichter aufweisenden Antriebselektronik, die dazu eingerichtet ist, den Drehstromantrieb dreiphasig mit den Phasen U, V, W zu steuern, mit einem Pulsweitenmodulations-Generator, der dazu eingerichtet ist, Strom- und Spannungssignale an den drei Phasen U, V, W als pulsbreitenmodulierte Signale bereitzustellen, mit Mitteln, die dazu eingerichtet sind, eine am Antrieb anliegende Ausgangsfrequenz des Wechselrichters zweikanalig zu ermitteln, mit einer Kalkulationseinheit zur Bestimmung der Istdrehzahl des Antriebs anhand der Ausgangsfrequenz des Wechselrichters, mit einer Vergleichseinheit und mit einer Abschaltvorrichtung, wobei die Vergleichseinheit dazu eingerichtet ist, die Istdrehzahl mit einer vorgebbaren Solldrehzahl zu vergleichen, wobei die Vergleichseinheit im Falle einer Überschreitung der Solldrehzahl durch die Istdrehzahl ein entsprechendes Signal erzeugt und an die Abschaltvorrichtung übergibt, die dazu eingerichtet ist, den Antrieb abzuschalten, sowie mit Mitteln zur Erfassung der Pulsbreite der pulsbreitenmodulierten Signale, dadurch gekennzeichnet, dass die Mittel einen ersten Mikrokontroller aufweisen, der dazu eingerichtet ist, für eine Ermittlung der Ausgangsfrequenz des Wechselrichters in einem ersten Kanal ausschließlich die Pulsbreite der pulsbreitenmodulierten Signale zu verwenden, und dass die Mittel einen zweiten Mikrokontroller aufweisen, der dazu eingerichtet ist, für eine Ermittlung der Ausgangsfrequenz des Wechselrichters auch in einem zweiten Kanal ausschließlich die Pulsbreite der pulsbreitenmodulierten Signale zu verwenden.

Es ist erfindungsgemäß vorgesehen, die am Antrieb im bestimmungsgemäßen Verwendungsfall anliegende Ausgangsfrequenz des Wechselrichters zu ermitteln und hierauf basierend die Istdrehzahl des Antriebs zu bestimmen. Dabei wird für die Ermittlung der Ausgangsfrequenz ausschließlich die Pulsbreite der pulsbreitenmodulierten Signale verwendet. In Abkehr zum Stand der Technik erfolgt mithin zur Drehzahlbestimmung weder eine Strommessung, noch eine Spannungsmessung. Es ist so nicht nur eine vereinfachte Verfahrensdurchführung und auch eine im Aufbau vereinfachte Vorrichtung ermöglicht, sondern auch ein erweitertes Anwendungsspektrum gegeben, da der besondere Vorteil der Pulsbreitenbestimmung darin liegt, nicht komplette Motortypen von der Sicherheitsfunktion SLS ausschließen zu müssen. So lassen sich insbesondere auch Servomotoren und Synchronreluktanzmotoren mittels des erfindungsgemäßen Verfahrens bzw. mittels der erfindungsgemäßen Vorrichtung sicher betreiben. Es sind bezüglich dieser Motortypen lediglich einige Arbeitspunkte auszuschließen, nicht aber diese Motortypen als solche, wie dies bei einer nach dem Stand der Technik notwendigerweise vorzusehenden Strommessung der Fall ist.

Der Clou der Erfindung liegt darin, dass es wider Erwarten auf die Erfassung der Strom- und/oder Spannungsverläufe, wie sie an den Drehstromantrieb übergeben werden, nicht ankommt. Dabei macht sich die Erfindung zunutze, dass die wechselrichterseitige Ausgangsspannung auf Basis der Zwischenkreisspannung eines den Wechselrichter bereitstellenden Frequenzumrichters ermittelt werden kann, wobei in die Bestimmung der Strangspannungen die Zwischenkreisspannung in einem festen Verhältnis einfließt, womit sich eine konkrete Messung sowohl der Ausgangsspannung, als auch der Zwischenkreisspannung erübrigt. Im Ergebnis der erfindungsgemäßen Ausgestaltung erfolgt damit eine Bestimmung der Ausgangsfrequenz und damit auch der Drehzahl allein anhand der Pulsbreiten der pulsbreitenmodulierten Signale. Dabei kann insbesondere mittels eines Zähltors mit der gleichen Auflösung des Pulsweitenmodulations-Generators die Pulsbreite der Ansteuerung beispielsweise der IGBTs von den Phasen U+, V+ und W+ ermittelt werden.

Da die Pulsbreitenmodulation ohnehin vorgesehen ist, lässt sich im Ergebnis mittels des erfindungsgemäßen Verfahrens bzw. mittels der erfindungsgemäßen Vorrichtung eine sichere Drehzahlermittlung auf einfache Weise und ohne zusätzliche Hardwareausrüstung erreichen. So bedarf es weder externer Sensorik, noch zusätzlicher Messeinrichtungen zur Strom- und/oder Spannungserfassung.

Die erfindungsgemäße Ausgestaltung sieht im Ergebnis vor, die Drehzahl eines Antriebs im bestimmungsgemäßen Verwendungsfall zu ermitteln. Die ermittelte Drehzahl wird als Istdrehzahl mit einer vorgebbaren Solldrehzahl verglichen. Liegt die Istdrehzahl oberhalb der Solldrehzahl, wird also im tatsächlichen Betrieb des Antriebs eine vorgebbare Grenzdrehzahl überschritten, so erfolgt ein sofortiges Abschalten des Antriebs.

Dabei wird die Drehzahl des Antriebs auf Basis der am Antrieb anliegenden, wechselrichterseitigen Ausgangsfrequenz berechnet. Die Ausgangsfrequenz wird ihrerseits wiederum unter Verwendung der Pulsbreiten der pulsbreitenmodulierten Signale bestimmt. Dies ist mittels eines Zähltors mit der gleichen Auflösung des PWM-Generators möglich, womit sich eine in der Durchführung sehr einfache Verfahrensabwicklung ergibt.

Die ermittelten Pulsbreiten werden gemäß einem weiteren Merkmal der Erfindung zur Bestimmung eines Transformationswinkels verwendet. Dabei wird zur Bestimmung eines Transformationswinkels das Verhältnis aus den transformierten Pulsweiten im ständerfesten Koordinatensystem genutzt, wie sich dies anhand der nachfolgend angegebenen Formeln ergibt.

So kann mittels der Pulsbreite der drei Phasen die Schaltfrequenz $CNT_{FSWITCH}$ ermittelt werden zu:

$$CNT_{FSWITCH} = 2\frac{p_U + p_V + p_W}{3}$$

bzw.

$$CNT_{FSWITCH} = Max(p_U; p_V; p_W) + Min(p_U; p_V; p_W) + 2\,TOTKOMP$$

Die Pulsbreite ist um die Totzeitkompensation $CNT_{TOTKOMP}$ zu bereinigen. Die Strangspannung ergibt sich dann mit der Schaltfrequenz $CNT_{FSWITCH}$ und der Zwischenkreisspannung $U_{IC}$ zu

$$\begin{bmatrix} u_U \\ u_V \\ u_W \end{bmatrix} = \frac{u_{IC}}{CNT_{FSWITCH}} \begin{bmatrix} p_U - CNT_{TOTKOMP\,U} \\ p_V - CNT_{TOTKOMP\,V} \\ p_W - CNT_{TOTKOMP\,W} \end{bmatrix}$$

In ein α/β-Koordinatensystem transformiert ergeben sich dann die Strangspannungen zu

$$\begin{bmatrix} u_\alpha \\ u_\beta \end{bmatrix} = \begin{bmatrix} \frac{2}{3} & -\frac{1}{3} & -\frac{1}{3} \\ 0 & \frac{1}{\sqrt{3}} & -\frac{1}{\sqrt{3}} \end{bmatrix} \cdot \begin{bmatrix} u_U \\ u_V \\ u_W \end{bmatrix}$$

wobei sich der Transformationswinkel aus den transformierten Spannungen im ständerfesten Koordinatensystem zu

$$\varphi = arctan\left(\frac{u_\beta}{u_\alpha}\right)$$

ergibt.

Da es gemäß vorstehender Formel zur Bestimmung des Transformationswinkels allein auf das Verhältnis der Spannungen ankommt, können direkt die Ansteuergrade zur Berechnung herangezogen werden, womit es einer Bestimmung der Zwischenkreisspannung, d.h. einer Messung der Zwischenkreisspannung nicht bedarf. Es ergibt sich wie folgt:

$$\begin{bmatrix} p_\alpha \\ p_\beta \end{bmatrix} = \begin{bmatrix} \frac{2}{3} & -\frac{1}{3} & -\frac{1}{3} \\ 0 & \frac{1}{\sqrt{3}} & -\frac{1}{\sqrt{3}} \end{bmatrix} \cdot \begin{bmatrix} p_U - CNT_{TOTKOMP\,U} \\ p_V - CNT_{TOTKOMP\,V} \\ p_W - CNT_{TOTKOMP\,W} \end{bmatrix}$$

4

so dass sich der Transformationswinkel ergibt zu

$$\varphi = arctan\left(\frac{p_\beta}{p_\alpha}\right)$$

wobei

$p_{U,V,W}$ — Pulsbreite der PWM-Signale für die Ansteuerung der Wechselrichter-Ventile
$u_{U,V,W}$ — Augenblickswerte der Phasenspannungen bezogen auf den virtuellen Sternpunkt
$u_{IC}$ — Augenblickswert der Zwischenkreisspannung
$\varphi$ — Rotorlage (Transformationswinkel)

Aus einer Winkeldifferenz ergibt sich sodann die Ausgangsfrequenz zu

$$\omega_1 = \frac{\Delta\varphi}{\Delta t} = \left(\varphi_{(k)} - \varphi_{(k-1)}\right) \cdot f_{CALC}$$

wobei

$\varphi$ — Rotorlage (Transformationswinkel)

$\omega_1$ — ausgegebene elektrische Kreisfrequenz $\left[\frac{rad}{s}\right]$

$f_{CALC}$ — Frequenz der Berechnung

Anhand der so ermittelten elektrischen Kreisfrequenz kann dann die mechanische Drehzahl $\omega$ in $\left[\frac{rad}{s}\right]$ des Drehstromantriebs ermittelt werden, wie sich dies im Weiteren noch näher ergibt.

Die Ausgangsfrequenz wird zweikanalig ermittelt, und zwar mittels eines ersten Mikrokontrollers einerseits und unabhängig davon mittels eines zweiten Mikrokontrollers andererseits. Die redundante Bestimmung der Ausgangsfrequenz dient der normgerechten Einhaltung erhöhter Sicherheitsanforderungen.

Es ist in diesem Zusammenhang im Übrigen bevorzugt, dass die von den beiden Mikrokontrollern ermittelten Ausgangsfrequenzen über eine Kreuzkommunikation zwischen den beiden Mikrokontrollern ausgetauscht und miteinander verglichen werden. Sollte im Ergebnis dieses Vergleichs eine Ungleichheit stehen, erfolgt ein sofortiges Abschalten des Antriebs.

Erfindungsgemäß ist mithin zwischen zwei Abschaltszenarien zu unterscheiden. Gemäß einem ersten Szenario kommt es zur sofortigen Abschaltung des Antriebs, wenn die beiden erfindungsgemäß vorgesehenen Mikrokontroller sich voneinander unterscheidende Ausgangsfrequenzen ermitteln. Auf eine Bestimmung der Istdrehzahl des Antriebs kommt es insoweit nicht mehr an. Es erfolgt eine Abschaltung des Antriebs bereits deshalb, weil es seitens der Mikrokontroller zur Ermittlung unterschiedlicher Ausgangsfrequenzen kommt. Dabei kann ein normkonformer Toleranzbereich vorgesehen sein, demgemäß eine Abweichung zwischen den von den Mikrokontrollern ermittelten Ausgangsfrequenzen in gewissen, ggfs. vorgebbaren Grenzen gestattet ist.

Sofern die von den Mikrokontrollern ermittelten Ausgangsfrequenzen innerhalb des vorgebbaren Toleranzbereichs gleich groß sind, erfolgt auf Basis dieser Bestimmung eine Ermittlung der Istdrehzahl des Antriebs. Bei Überschreitung einer vorgebbaren Solldrehzahl durch die Istdrehzahl erfolgt eine Abschaltung des Antriebs, weil in diesem Fall der Antrieb mit einer zu hohen, d.h. unzulässig hohen Istdrehzahl dreht. Ein Abschalten des Antriebs unterbleibt mithin, wenn die Istdrehzahl unterhalb der Solldrehzahl liegt. Auch bezüglich des Vergleichs zwischen Istdrehzahl und Solldrehzahl kann ggf. ein Toleranzbereich vorgesehen sein.

Die Istdrehzahl des Antriebs kann in an sich bekannter Weise auf Basis der ausgegebenen elektrischen Kreisfrequenz $\omega_1$ bestimmt werden. Dabei ist zur Bestimmung der mechanischen Drehzahl zwischen unterschiedlichen Antriebstypen zu unterscheiden.

Für einen Asynchronantrieb ergibt sich beispielsweise:

$$\omega = \frac{\omega_1}{p} \cdot (1 - s)$$

wobei

$\omega_1$    ausgegebene elektrische Kreisfrequenz $\left[\dfrac{rad}{s}\right]$

$\omega$    mechanische Drehzahl $\left[\dfrac{rad}{s}\right]$

s    Schlupf

Für einen Synchronantrieb ergibt sich indes wie folgt:

$$\omega = \frac{\omega_1}{p}$$

wobei

$\omega_1$    ausgegebene elektrische Kreisfrequenz $\left[\dfrac{rad}{s}\right]$

$\omega$    mechanische Drehzahl $\left[\dfrac{rad}{s}\right]$

Mit der Erfindung wird sowohl verfahrensseitig als auch vorrichtungsseitig im Ergebnis der Vorteil erzielt, dass normkonform eine sichere Drehzahlermittlung ermöglicht ist, wobei in Abkehr zum Stand der Technik weder eine Strommessung, noch eine Spannungsmessung erfolgt. Die sichere Drehzahlermittlung erfolgt allein aus dem Aussteuerungsgrad der PWM-Signale. Dies ermöglicht nicht nur eine vereinfachte Verfahrens- und Vorrichtungsausgestaltung, es ist auch möglich, von der Sicherheitsfunktion SLS bislang ausgeschlossene Antriebstypen, wie zum Beispiel Servomotoren und Synchronreluktanzmotoren einer sicheren Drehzahlermittlung zu unterziehen.
Weitere Merkmale und Vorteile der Erfindung ergeben sich aus der nachfolgenden Beschreibung anhand der Figuren. Dabei zeigen

Fig. 1    anhand eines schematischen Schaltplans die erfindungsgemäße Vorrichtung bzw. das erfindungsgemäße Verfahren;

Fig. 2    ein Ersatzschaltbild eines Asynchronantriebs und

Fig. 3    ein Ersatzschaltbild eines Synchronantriebs.

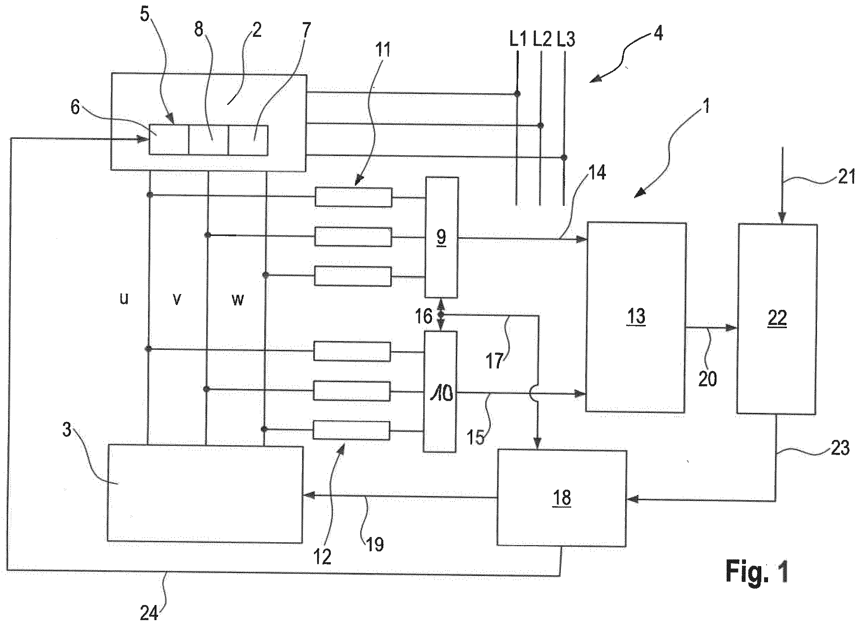

Fig. 1 lässt in einer schematischen Schaltbilddarstellung die erfindungsgemäße Vorrichtung 1 zur fehlersicheren Drehzahlüberwachung eines geberlosen Drehstromantriebs 3 erkennen.
Der Drehstromantrieb 3 wird dreiphasig von einer Antriebselektronik 2 angesteuert, und zwar mit den Motorphasen U, V, W. Dabei wird die Antriebselektronik 2 ihrerseits von einer dreiphasigen Versorgungsleitung 4 mit den Phasen L1, L2 und L3 versorgt.
Zur Ansteuerung des Drehstromantriebs 3, bei dem es sich um einen Elektromotor in der Ausgestaltung beispielsweise eines Asynchronmotors handelt, verfügt die Antriebselektronik 2 über einen Frequenzumrichter 5, wobei die Spannungssignale an den drei Motorphasen U, V, W als pulsweitenmodulierte Signale vorliegen.
Der Frequenzumrichter 5 verfügt in an sich bekannter Weise über einen Gleichrichter 6 und einen Wechselrichter 7, die mittels eines Zwischenkreises 8 miteinander verschaltet sind.
Die erfindungsgemäße Vorrichtung 1 verfügt über zwei redundant angeordnete Mikrokontroller 9 und 10, mittels welcher die wechselrichterseitige Ausgangsfrequenz zweikanalig ermittelt wird. Es sind zu diesem Zweck ein erster Kanal 11 und ein zweiter Kanal 12 vorgesehen, wobei der Mikrokontroller 9 am ersten Kanal 11 und der Mikrokontroller 10 am zweiten Kanal 12 angeschlossen sind. Über eine Kreuzkommunikation 16 sind die beiden Mikrokontroller 9 und 10 miteinander verschaltet.
Im bestimmungsgemäßen Verwendungsfall erfolgt verfahrensseitig eine Ermittlung der am Drehstromantrieb 3 anliegenden Ausgangsfrequenz des Wechselrichters 7. Dabei wird zur Ermittlung der Ausgangsfrequenz die Pulsbreite der pulsbreitenmodulierten Signale verwendet.
Die von den beiden Mikrokontrollern 9 und 10 ermittelten Ausgangsfrequenzen werden über die Kreuzkommunikation 16 miteinander verglichen. Bei einer Ungleichheit erfolgt ein sofortiges Abschalten des Antriebs 3, zu welchem Zweck eine Abschaltvorrichtung 18 vorgesehen ist. Diese steht in Entsprechung des Pfeils 19 in kommunikationstechnischer Verbindung mit dem Antrieb 3. Alternativ und auch bevorzugt ist anstelle der kommunikationstechnischen Verbindung 19 in Entsprechung des Pfeils 24 eine kommunikationstechnische Verbindung zwischen der Abschaltvorrichtung 19 und dem Frequenzumrichter 5 vorgesehen. Sobald eine Ungleichheit der Ausgangsfrequenzen festgestellt wird, erfolgt in Entsprechung des Pfeils 17 eine Signalvermittlung an die Abschaltvorrichtung 18, die dann in schon vorbeschriebener Weise für eine sofortige Abschaltung des Antriebs 3 entweder direkt über die kommunikationstechnische Verbindung 19 oder unter Zwischenschaltung des Frequenzumrichters 5 über die kommunikationstechnische Verbindung 24 indirekt Sorge trägt. Die Abschaltung des Antriebs 3 erfolgt vorzugsweise durch die Betätigung eines entsprechenden Schaltmittels, indem beispielsweise der Frequenzumrichter 5 vom Versorgungsnetz getrennt wird.

Sofern die von den Mikrokontrollern 9 und 10 redundant ermittelten Ausgangsfrequenzen gleich sind, wird hierauf basierend eine Istdrehzahl 20 des Antriebs 3 ermittelt. Zu diesem Zweck verfügt die erfindungsgemäße Vorrichtung 1 über eine Kalkulationseinheit 13, die in Entsprechung der Pfeile 14 und 15 mit den Mikrokontrollern 9 und 10 in kommunikationstechnischer Verbindung steht.

Die von der Kalkulationseinheit 13 ermittelte Istdrehzahl 20 wird mit einer vorgebbaren Solldrehzahl 21 verglichen. Die erfindungsgemäße Vorrichtung verfügt zu diesem Zweck über eine Vergleichseinrichtung 22. Im Falle einer Überschreitung der Solldrehzahl 21 durch die Istdrehzahl 20 erfolgt ein sofortiges Abschalten des Antriebs 3, zu welchem Zweck die Vergleichseinrichtung 20 in Entsprechung des Pfeils 23 in kommunikationstechnischer Verbindung mit der Abschaltvorrichtung 18 steht.

Die beiden Mikrokontroller 9 und 10 bestimmen die Ausgangsfrequenz auf Basis einer Winkeldifferenz wie folgt

$$\omega_1 = \frac{\Delta\varphi}{\Delta t} = \left(\varphi_{(k)} - \varphi_{(k-1)}\right) \cdot f_{CALC}$$

wobei sich die Rotorlage, d.h. der Transformationswinkel $\varphi$ wie folgt ergibt

$$\varphi = arctan\left(\frac{p_\beta}{p_\alpha}\right)$$

worin

$$\begin{bmatrix} p_\alpha \\ p_\beta \end{bmatrix} = \begin{bmatrix} \frac{2}{3} & -\frac{1}{3} & -\frac{1}{3} \\ 0 & \frac{1}{\sqrt{3}} & -\frac{1}{\sqrt{3}} \end{bmatrix} \cdot \begin{bmatrix} p_U - CNT_{TOTKOMP\ U} \\ p_V - CNT_{TOTKOMP\ V} \\ p_W - CNT_{TOTKOMP\ W} \end{bmatrix}$$

wobei

$p_{U,V,W}$    Pulsbreite der PWM-Signale für die Ansteuerung der Wechselrichter-Ventile
$\varphi$    Rotorlage (Transformationswinkel)
$\omega_1$    ausgegebene elektrische Kreisfrequenz $\left[\frac{rad}{s}\right]$
$f_{CALC}$    Frequenz der Berechnung

Wie sich aus der obigen Darstellung ergibt, kann die Ausgangsfrequenz unter Verwendung des erfindungsgemäßen Verfahrens direkt aus dem Aussteuerungsgrad der PWM-Signale ermittelt werden. Es bedarf weder einer Messung des Ausgangsstroms oder der Ausgangsspannung, noch der Zwischenkreisspannung.

Die schematische Darstellung nach Fig. 1 dient lediglich der Erläuterung und ist rein exemplarisch. Es ist insbesondere möglich, die Kalkulationseinheit 13, die Vergleichseinrichtung 22, die Abschaltvorrichtung 18 und die Mikrokontroller 9 und 10 zu einer gemeinsamen Einrichtung miteinander zu kombinieren. Es kann auch vorgesehen sein, dass die Mikrokontroller 9 und 10 jeweils redundant auch die Funktionen der Kalkulationseinheit 13, der Abschaltvorrichtung 18 und/oder der Vergleichseinrichtung 22 übernehmen. Von erfindungswesentlicher Bedeutung ist indes allein, dass eine sichere Drehzahlermittlung allein aus dem Ansteuerungsgrad der PWM-Signale erfolgt, wobei eine zweikanalige Bestimmung realisiert ist, die in einer Kreuzkommunikation Ungleichheiten erkennt, wobei im Falle einer festgestellten Ungleichheit eine sofortige Abschaltung des Antriebs 3 erfolgt. Im Übrigen erfolgt eine Abschaltung des Antriebs 3, wenn die ermittelte Istdrehzahl oberhalb einer vorgebbaren Solldrehzahl liegt. Dabei können sowohl zur Feststellung von Ungleichheiten und/oder Drehzahlüberschreitungen Toleranzbereiche vorgesehen sein, die normkonform festzulegen sind.

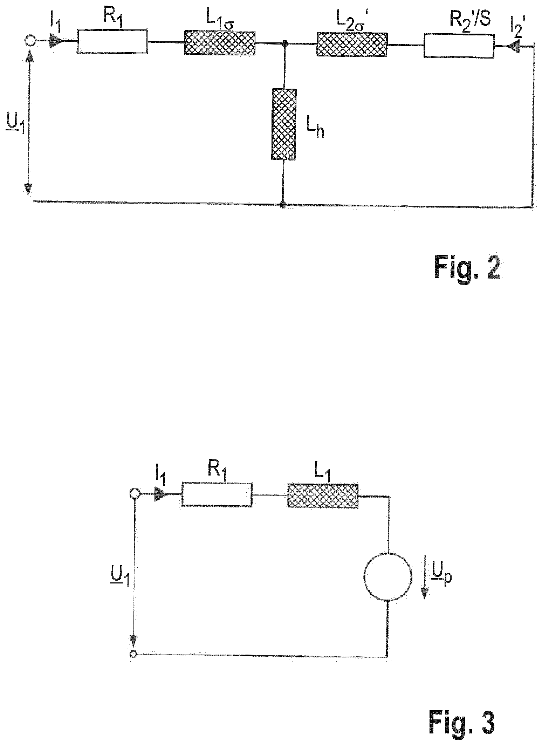

Fig. 2 lässt das Ersatzschaltbild eines Asynchronantriebs erkennen. Für einen solchen Antrieb ergibt sich die Istdrehzahl 21 zu

$$\omega = \frac{\omega_1}{p} \cdot (1 - s)$$

mit

$$X_{1\sigma} = \omega_1 L_{1\sigma} \quad \text{und} \quad X_{2\sigma}{}' = \omega_1 L_{2\sigma}{}' \quad \text{und} \quad X_h = \omega_1 L_h$$

wobei

$$Z_{1Re} = \frac{u_{1\alpha} i_{1\alpha} + u_{1\beta} i_{1\beta}}{i_{1\alpha}{}^2 + i_{1\beta}{}^2}$$

$$Z_{1Im} = \frac{u_{1\beta} i_{1\alpha} - u_{1\alpha} i_{1\beta}}{i_{1\alpha}{}^2 + i_{1\beta}{}^2}$$

und

$$\left(\frac{R_2{}'}{s}\right)^2 + (X_{2\sigma}' + X_h)^2 = -X_h{}^2 \frac{(X_{2\sigma}' + X_h)}{Z_{1Im} - (X_{1\sigma} + X_h)}$$

$$Z_{1Re} = R_1 - \frac{\frac{R_2{}'}{s}}{(X_{2\sigma}' + X_h)}[Z_{1Im} - (X_{1\sigma} + X_h)]$$

$$s = \frac{R_2{}'}{X_{2\sigma}' + X_h} \frac{X_{1\sigma} + X_h - Z_{1Im}}{Z_{1Re} - R_1}$$

worin

$R_1$      Ständerwiderstand
$R_2{}'$     Läuferwiderstand
$L_{1\sigma}$     Ständerstreuinduktivität
$L_{2\sigma}{}'$    Läuferstreuinduktivität
$L_h$     Hauptinduktivität
$s$      Schlupf

Fig. 3 lässt das Ersatzschaltbild eines Synchronantriebs erkennen. Diesbezüglich gilt

$$\underline{U_1} = \underline{U_P} + \underline{I_1}(R_1 + jX_1)$$

$$\underline{U_P} = \omega \cdot \underline{\Psi_P}$$

wobei sich die Drehzahl wie folgt ergibt

$$\omega = \frac{\omega_1}{p}$$

worin

$\Psi_P$     Rotorfluß
$R_1$     Ständerwiderstand
$L_{1d}$     Ständerinduktivität in d-Richtung
$L_{1q}$     Ständerinduktivität in q-Richtung

**Bezugszeichenliste**

1     Vorrichtung
2     Antriebselektronik
3     Elektromotor (Drehstromantrieb)
4     Versorgungsleitung
5     Frequenzumrichter
6     Gleichrichter
7     Wechselrichter
8     Zwischenkreis
9     Mikrokontroller
10     Mikrokontroller
11     erster Kanal
12     zweiter Kanal
13     Kalkulationseinheit
14     Pfeil
15     Pfeil
16     Kreuzkommunikation
17     Pfeil
18     Abschaltvorrichtung
19     Pfeil (kommunikationstechnische Verbindung)
20     Istdrehzahl
21     Solldrehzahl
22     Vergleichseinheit
23     Pfeil (Signal)
24     Pfeil (kommunikationstechnische Verbindung)

**Patentansprüche**

1. Verfahren zur fehlersicheren Drehzahlüberwachung eines geberlosen Drehstromantriebs (3), bei dem der Drehstromantrieb (3) von einer einen Wechselrichter (7) aufweisenden Antriebselektronik (2) dreiphasig mit den Phasen U, V, Wangesteuert wird, wobei die Spannungssignale an den drei Phasen U, V, W als pulsweitenmodulierte Signale vorliegen, bei dem eine am Antrieb (3) anliegende Ausgangsfrequenz des Wechselrichters (7) ermittelt und daraus eine Istdrehzahl (20) des Antriebs (3) bestimmt wird, bei dem die Istdrehzahl (20) mit einer vorgebbaren Solldrehzahl (21) verglichen wird und bei dem im Falle einer Überschreitung der Solldrehzahl (21) durch die Istdrehzahl (20) ein Abschalten des Antriebs (3) erfolgt, wobei die Ausgangsfrequenz zweikanalig ermittelt wird und zur Ermittlung der Ausgangsfrequenz des Wechselrichters (3) in einem ersten Kanal ausschließlich die Pulsbreite der pulsbreitenmodulierten Signale verwendet wird,
**dadurch gekennzeichnet, dass**
die Ausgangsfrequenz im ersten Kanal mittels eines ersten Mikrokontrollers (9) einerseits und unabhängig davon in einem zweiten Kanal mittels eines zweiten Mikrokontrollers (10) andererseits ermittelt wird, wobei zur Ermittlung der Ausgangsfrequenz des Wechselrichters (3) auch im zweiten Kanal ausschließlich die Pulsbreite der pulsbreitenmodulierten Signale verwendet wird.

2. Verfahren nach Anspruch 1, **dadurch gekennzeichnet, dass** die Pulsbreiten zur Bestimmung eines Transformationswinkels verwendet werden.

3. Verfahren nach Anspruch 2, **dadurch gekennzeichnet, dass** zur Bestimmung eines Transformationswinkels das Verhältnis aus den transformierten Pulsweiten im ständerfesten Koordinatensystem verwendet wird.

4. Verfahren nach einem der vorhergehenden Ansprüche, **dadurch gekennzeichnet, dass** eine Transformationswinkeldifferenz zur Bestimmung einer Ausgangsfrequenz verwendet wird.

5. Verfahren nach einem der vorhergehenden Ansprüche, **dadurch gekennzeichnet, dass** die Pulsbreiten um eine Totzeitkompensation bereinigt werden.

6. Verfahren nach Anspruch 1, **dadurch gekennzeichnet, dass** die von den beiden Mikrokontrollern (9, 10) ermittelten Ausgangsfrequenzen über eine Kreuzkommunikation (16) zwischen den beiden Mikrokontrollern (9, 10) ausgetauscht und miteinander verglichen werden.

7. Verfahren nach Anspruch 6, **dadurch gekennzeichnet, dass** bei Ungleichheit der Ausgangsfrequenzen ein Abschalten des Antriebs (3) erfolgt.

8. Vorrichtung zur fehlersicheren Drehzahlüberwachung eines geberlosen Drehstromantriebs (3), insbesondere zur Durchführung des Verfahrens nach einem der vorhergehenden Ansprüche 1 bis 7,

   - mit einer einen Wechselrichter (7) aufweisenden Antriebselektronik (2), die dazu eingerichtet ist, den Drehstromantrieb (3) dreiphasig mit den Phasen U,V,W zu steuern,
   - mit einem Pulsweitenmodulations-Generator, der dazu eingerichtet ist, Spannungssignale an den drei Phasen U, V, W als pulsweitenmodulierte Signale bereitzustellen,
   - mit Mitteln (9, 10, 13), die dazu eingerichtet sind, eine am Antrieb (3) anliegende Ausgangsfrequenz des Wechselrichters (7) zweikanalig zu ermitteln,
   - mit einer Kalkulationseinheit (13) zur Bestimmung der Istdrehzahl (20) des Antriebs (3) anhand der Ausgangsfrequenz des Wechselrichters,
   - mit einer Vergleichseinheit (22) und
   - mit einer Abschaltvorrichtung (18),
   - wobei die Vergleichseinheit (22) dazu eingerichtet ist, die Istdrehzahl (20) mit einer vorgebbaren Solldrehzahl (21) zu vergleichen,
   - wobei die Vergleichseinheit (22) im Falle einer Überschreitung der Solldrehzahl (21) durch die Istdrehzahl (20) ein entsprechendes Signal (23) erzeugt und an die Abschaltvorrichtung (18) übergibt, die dazu eingerichtet ist, den Antrieb (3) abzuschalten,
   - sowie mit Mitteln (9, 10) zur Erfassung der Pulsbreiten der pulsbreitenmodulierten Signale,
   **dadurch gekennzeichnet, dass**
   die Mittel (9, 10) einen ersten Mikrokontroller (9) aufweisen, der dazu eingerichtet ist, für eine Ermittlung der Ausgangsfrequenz des Wechselrichters (7) in einem ersten Kanal ausschließlich die Pulsbreite der pulsbreitenmodulierten Signale zu verwenden,
   und dass die Mittel (9, 10) einen zweiten Mikrokontroller (10) aufweisen, der dazu eingerichtet ist, für eine Ermittlung der Ausgangsfrequenz des Wechselrichters (7) auch in einem zweiten Kanal ausschließlich die Pulsbreite der pulsbreitenmodulierten Signale zu verwenden.

## Claims

1. Method for fail-safe speed monitoring of a sensorless three-phase drive (3), in which the three-phase drive (3) is driven in three phases with the phases U, V, W by drive electronics (2) having an inverter (7), the voltage signals on the three phases U, V, W being present as pulse width modulated signals, in which an output frequency of the inverter (7) applied to the drive (3) is determined and an actual speed (20) of the drive (3) is determined therefrom, in which the actual speed (20) is compared with a predeterminable target speed (21) and in which, if the target speed (21) is exceeded by the actual speed (20), the drive (3) is switched off, the output frequency being determined in two channels and solely the pulse width of the pulse width modulated signals being used to determine the output frequency of the inverter (3) in a first channel,
**characterized in that**
the output frequency is determined in the first channel by means of a first microcontroller (9) on the one hand and independently thereof in a second channel by means of a second microcontroller (10) on the other hand, wherein solely the pulse width of the pulse width modulated signals is used to determine the output frequency of the inverter (3) also in the second channel.

2. Method according to claim 1, **characterized in that** the pulse widths are used to determine a transformation angle.

3. Method according to claim 2, **characterized in that** the ratio of the transformed pulse widths in the coordinate system fixed to the stator is used to determine a transformation angle.

4. Method according to any of the preceding claims, **characterized in that** a transformation angle difference is used to determine an output frequency.

5. Method according to any of the preceding claims, **characterized in that** the pulse widths are adjusted for dead time compensation.

6. Method according to claim 1, **characterized in that** the output frequencies determined by the two microcontrollers (9, 10) are exchanged via cross communication (16) between the two microcontrollers (9, 10) and compared with each other.

7. Method according to claim 6, **characterized in that** the drive (3) is switched off in the case of inequality of the output frequencies.

8. Device for fail-safe speed monitoring of a sensorless three-phase drive (3), in particular for carrying out the method according to any of the preceding claims 1 to 7,

   - with drive electronics (2) which have an inverter (7) and are adapted to control the three-phase drive (3) in three phases with the phases U, V, W,
   - with a pulse-width modulation generator which is adapted to provide voltage signals on the three phases U, V, W as pulse width modulated signals,
   - with means (9, 10, 13) which are adapted to determine an output frequency of the inverter (7) applied to the drive (3) in two channels,
   - with a calculation unit (13) for determining the actual speed (20) of the drive (3) on the basis of the output frequency of the inverter,
   - with a comparison unit (22) and
   - with a switch-off device (18),
   - the comparison unit (22) being arranged to compare the actual speed (20) with a predeterminable target speed (21),
   - the comparison unit (22) generating a corresponding signal (23) in the event that the actual speed (20) exceeds the target speed (21) and transmitting it to the switch-off device (18), which is arranged to switch off the drive (3),
   - as well as with means (9, 10) for detecting the pulse widths of the pulse width modulated signals,
   **characterized in that**
   the means (9, 10) comprise a first microcontroller (9) which is adapted to use exclusively the pulse width of the pulse width modulated signals for determining the output frequency of the inverter (7) in a first channel,
   and **in that** the means (9, 10) have a second microcontroller (10) which is adapted to use exclusively the pulse width of the pulse width modulated signals for determining the output frequency of the inverter (7) also in a second channel.

**Revendications**

1. Procédé de surveillance de la vitesse de rotation protégée contre les erreurs d'un entraînement de courant triphasé (3) sans capteur, dans lequel l'entraînement de courant triphasé (3) est commandé par un système électronique d'entraînement (2) présentant un onduleur (7) de manière triphasée avec les phases U, V, W, les signaux de tension sur les trois phases U, V, W étant présents sous forme de signaux modulés en largeur d'impulsion, dans lequel une fréquence de sortie de l'onduleur (7) appliquée à l'entraînement (3) est déterminée et une vitesse de rotation réelle (20) de l'entraînement (3) est déterminée à partir de celle-ci, dans lequel la vitesse de rotation réelle (20) est comparée à une vitesse de rotation de consigne (21) pouvant être prédéfinie et dans lequel, en cas de dépassement de la vitesse de rotation de consigne (21) par la vitesse de rotation réelle (20), une coupure de l'entraînement (3) a lieu, la fréquence de sortie étant déterminée sur deux canaux et, pour déterminer la fréquence de sortie de l'onduleur (3), on utilise dans un premier canal exclusivement la largeur d'impulsion des signaux modulés en largeur d'impulsion

**caractérisé en ce que**

la fréquence de sortie est déterminée dans le premier canal au moyen d'un premier microcontrôleur (9) d'une part et indépendamment de cela dans un deuxième canal au moyen d'un deuxième microcontrôleur (10) d'autre part, la largeur d'impulsion des signaux modulés en largeur d'impulsion étant exclusivement utilisée pour déterminer la fréquence de sortie de l'onduleur (3) également dans le deuxième canal.

2. Procédé selon la revendication 1, **caractérisé en ce que** les largeurs d'impulsion sont utilisées pour déterminer un angle de transformation.

3. Procédé selon la revendication 2, **caractérisé en ce que**, pour déterminer un angle de transformation, on utilise le rapport entre les largeurs d'impulsion transformées dans le système de coordonnées fixe du stator.

4. Procédé selon l'une des revendications précédentes, **caractérisé en ce qu'**une différence d'angle de transformation est utilisée pour déterminer une fréquence de sortie.

5. Procédé selon l'une des revendications précédentes, **caractérisé en ce que** les largeurs d'impulsion sont corrigées par une compensation de temps mort.

6. Procédé selon la revendication 1, **caractérisé en ce que** les fréquences de sortie déterminées par les deux microcontrôleurs (9, 10) sont échangées et comparées entre elles par une communication croisée (16) entre les deux microcontrôleurs (9, 10).

7. Procédé selon la revendication 6, **caractérisé en ce qu'**en cas d'inégalité des fréquences de sortie, l'entraînement (3) est arrêté.

8. Dispositif de surveillance de la vitesse de rotation d'un entraînement triphasé sans capteur (3), notamment pour la mise en oeuvre du procédé selon l'une des revendications précédentes 1 à 7,

   - avec un système électronique d'entraînement (2) présentant un onduleur (7), qui est conçu pour commander l'entraînement triphasé (3) avec les phases U, V, W,
   - avec un générateur de modulation de largeur d'impulsion qui est conçu pour fournir des signaux de tension sur les trois phases U, V, W sous forme de signaux modulés en largeur d'impulsion,
   - avec des moyens (9, 10, 13) qui sont conçus pour déterminer une fréquence de sortie de l'onduleur (7) appliquée à l'entraînement (3) sur deux canaux,
   - avec une unité de calcul (13) pour déterminer la vitesse de rotation réelle (20) de l'entraînement (3) à l'aide de la fréquence de sortie de l'onduleur,
   - avec une unité de comparaison (22) et
   - avec un dispositif de coupure (18),
   - l'unité de comparaison (22) étant conçue pour comparer la vitesse de rotation réelle (20) à une vitesse de rotation de consigne (21) pouvant être prédéfinie,
   - l'unité de comparaison (22) générant, en cas de dépassement de la vitesse de rotation de consigne (21) par la vitesse de rotation réelle (20), un signal correspondant (23) et le transmettant au dispositif de coupure (18), qui est conçu pour couper l'entraînement (3),
   - ainsi qu'avec des moyens (9, 10) pour détecter les largeurs d'impulsion des signaux modulés en largeur d'impulsion,

   **caractérisé en ce que**

   les moyens (9, 10) comportent un premier microcontrôleur (9) qui est conçu pour utiliser exclusivement la largeur d'impulsion des signaux modulés en largeur d'impulsion pour une détermination de la fréquence de sortie de l'onduleur (7) dans un premier canal,

   et **en ce que** les moyens (9, 10) comportent un deuxième microcontrôleur (10) qui est conçu pour utiliser exclusivement la largeur d'impulsion des signaux modulés en largeur d'impulsion pour déterminer la fréquence de sortie de l'onduleur (7) également dans un deuxième canal.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005010854 A1
- DE 102009048944 A1
- EP 1211774 A1
- DE 102011009927 A1